# EUROPEAN PATENT SPECIFICATION

(11) **EP 2 381 616 B1**
(45) Date of publication and mention of the grant of the patent: **16.01.2013**
(21) Application number: 11169627.4
(22) Date of filing: 11.11.2005
(51) Int. Cl.: H04L 9/32, G09C 1/00, H04L 29/06

(54) **Signature and verifying method and signature and verifying device**
Signatur- und Verifikationsverfahren und Signatur- und Verifikationseinrichtung
Procédé de signature et de vérification, et dispositif de signature et de vérification

(30) Priority: 29.11.2004 JP 2004343703
(43) Date of publication of application: 26.10.2011
(62) Divisional of application: 05806273.8
(73) Proprietor: NEC Corporation, Minato-ku, Tokyo 108-8001 (JP)
(72) Inventor: Teranishi, Isamu, Minato-ku, Tokyo 108-8001 (JP); Sako, Kazue, Minato-ku, Tokyo 108-8001 (JP); Taguchi, Daigo, Minato-ku, Tokyo 108-8001 (JP); Noda, Jun, Minato-ku, Tokyo 108-8001 (JP)
(74) Representative: Reeve, Nicholas Edward

(56) References cited:
- ANNA LYSYANSKAYA ET AL: "Sequential Aggregate Signatures from Trapdoor Permutations", 17 April 2004 (2004-04-17), ADVANCES IN CRYPTOLOGY - EUROCRYPT 2004; [LECTURE NOTES IN COMPUTER SCIENCE;;LNCS], SPRINGER-VERLAG, BERLIN/HEIDELBERG, PAGE(S) 74 - 90, XP019005045, ISBN: 978-3-540-21935-4 * the whole document *
- WALTER C D: "Montgomery exponentiation needs no final subtractions", ELECTRONICS LETTERS, IEE STEVENAGE, GB LNKD- DOI:10.1049/EL:19991230, vol. 35, no. 21, 14 October 1999 (1999-10-14), pages 1831-1832, XP006012810, ISSN: 0013-5194
- MITOMI S ET AL: "A GENERAL MODEL OF MULTISIGNATURE SCHEMES WITH MESSAGE FLEXIBILITY, ORDER FLEXIBILITY AND ORDER VERIFIABILITY", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E84A, no. 10, 1 October 2001 (2001-10-01), pages 2488-2499, XP001107779, ISSN: 0916-8508
- KAWAUCHI K ET AL: "PROBABILISTIC MULTI-SIGNATURE SCHEMES USING A ONE-WAY TRAPDOOR PERMUTATION", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E87-A, no. 5, 1 May 2004 (2004-05-01) , pages 1141-1153, XP001196120, ISSN: 0916-8508

## Description

The present invention relates to a signature method and verification method and a signature device and verification device, and more particularly, to a signature method and verification method and a signature device and verification device where the signature length does not depend on the number of signature devices when a plurality of signature devices are used for signatures.

As computers and the Internet environment are widely used, more and more messages are sent and received electronically. In this case, it is desirable that an electronic signature be added to a message to prevent the message from being altered while the message is sent.

However, when multiple signature devices create signatures using a well-known signature method such as RSA or DSA, all signature devices must individually create signed texts and save all those signed texts to indicate that all signature devices have signed. Therefore, because the total data length of the signed texts is proportional to the number of signature devices, the efficiency is degraded when there are many signature devices.

One of the signature methods to solve this problem is proposed in non-Patent Document 1. FIG. 11 shows the procedure for this conventional signature method.

The following defines the meaning of the symbols used in this specification. "∥" means the concatenation of bit strings. "○" means the exclusive OR on a bit basis. "^" represents the arithmetic operator for exponentiating the left operand by the exponent in the right operand. For example, f^{-1} means f⁻¹. "_{x}" represents that x is a subscript. For example, u_{i} means uᵢ.

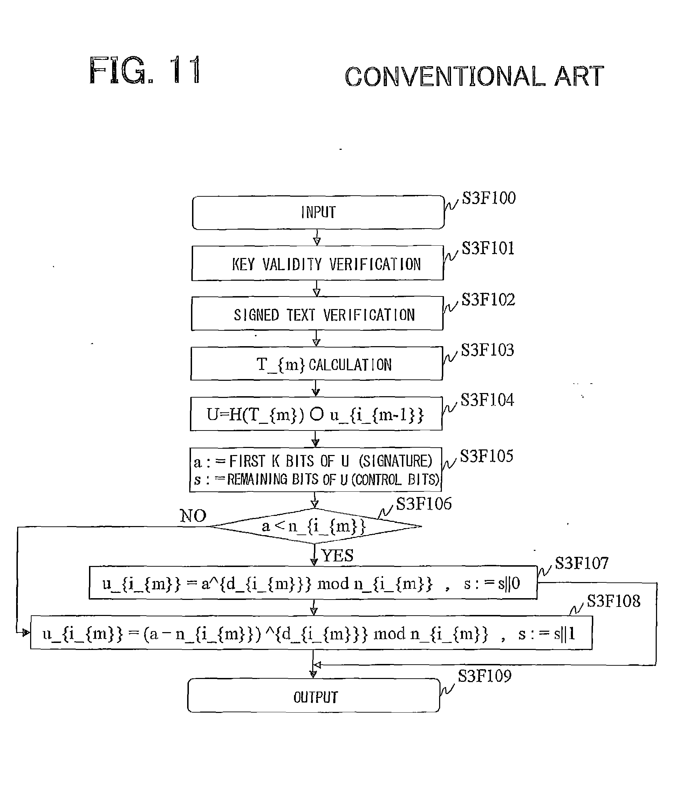

Referring to FIG. 11, when a signed text u_{i_{m-1}} to be signed is entered (S3F100), the verification of the validity of the key owned (S3F101) and the verification of the validity of the signed text u_{i_{m-1}} (S3F102) are performed and, after that, T_{m}, which is the concatenation of the public key of the local signature device and the public keys of the signature devices that have already signed, is calculated (S3F103). Next, the exclusive OR U between the hash value of T_{m} and the signed text u_{i_{m-1}} is calculated (S3F104), the first k security parameter bits of the bit string U are assigned to a, and the remaining bits are assigned to s (S3F105). Next, a is compared with the RSA modulus n_{i_{m}} of the local signature device (S3F106) and, if a is smaller than the RSA modulus n_{i_{m}}, the signed text u_{i_{m}} is calculated for a using the private key d_{i_{m}} according to the RSA method (S3F107), and the result is output (S3F109). At this time, one-bit information 0 is added to s as the control information. If a is larger than the RSA modulus n_{i_{m}}, the RSA signature cannot be calculated for a number larger than the modulus and, therefore, n_{i_{m}} is subtracted from a, the signed text u_{i_{m}} is calculated for the resulting a (S3F108), and the result is output (S3F109). At this time, one-bit information 1 is added to s as the control information.

The signature cannot be calculated for a number larger than the RSA modulus n_{i_{m}} of a signature device when RSA is used as described above. To solve this problem, the method according to the conventional technology described in the Non-Patent Document 1 subtracts the modulus n_{i_{m}} from a number, which is larger, before the signature is added. At this time, to allow the verification to be performed later, one-bit control information (1 when the modulus is exceeded, and 0 when the modulus is not exceeded) is added at the end. When the signed text u_{i_{m}} is verified, the verification is repeated by using the public keys of the signature devices in reverse order of adding signatures and, when the predetermined initial value is finally obtained, the signatures are determined to be valid.
**[Non-Patent Document 1]**
   Anna Lysyanskaya, Silvio Micali, Leonid Reyzin, Hovav Shacham. Sequential Aggregate Signatures from Trapdoor Permutations. In Advances in Cryptology -- EUROCRYPT 2004, vol. 3027 of LNCS, pp. 74-90. Springer-Verlag, 2004.
**[Non-Patent Document 2]**
   "Alfred J. Menezes Paul C. van Oorschot, and Scott A. Vanstone. Handbook of Applied Cryptography. CRC Press." (http://www.cacr.math.uwaterloo.ca/hac/).

The known signature method described in Non-Patent Document 1, in which the total data length of signed texts is not proportional to the number of signature devices, can reduce the amount of memory for storing signed texts even if multiple signature devices add signature sequentially and can reduce the amount of communication when communication is performed. However, because the signature length is determined by the fixed value + number of signatures, the problem is that the signature length is prolonged, though little by little, as the number of signatures increases.

We have therefore appreciated it would be desirable to improve the problems with the known signature method described above and to make the signature fixed-length regardless of the number of signature devices.

### SUMMARY OF THE INVENTION

The invention is defined in the independent claims to which reference should now be made. Advantageous features are set forth in the dependent claims.

According to the present invention, the signature device i_{m} performs a first operation in which the device performs no operation if a received signed text u_{i_{m-1}} exceeds the modulus n_{i_{m} but, if not, adds an RSA-signature-based signature, a second operation in which the device multiplies the result of the first operation by a function that maps the result to a value larger by the modulus n_{i_{m}}, and a third operation in which the device performs no operation if the result of the second operation exceeds the modulus n_{i_{m}} but, if not, adds an RSA-signature-based signature. At this time, if the number of bits of the RSA modulus of each signature device is equal to the security parameter κ, the modulus n_{i_{m}} of the signed text u_{i_{m-1}} and the signature device i_{m} becomes a number smaller than 2^{κ}. In the first operation, because an RSA-signature-based signature is added to the signed text u_{i_{m-1}} whose value is 0 to n_{i_{m}}, the value after the first operation is 0 to n_{i_{m}}. On the other hand, because no operation is performed for the signed text u_{i_{m-1}} whose value is n_{i_{m}} to 2^{κ}, the value after the first operation is n_{i_{m}} to 2^{κ}. In the second operation, because n_{i_{m}} is added to the value after the first operation with 2^{κ} as the modulus, the value after the second operation also becomes a number smaller than 2^{κ} but, if the value after the first operation is n_{i_{m}} to 2^{κ}, the value after the second operation is 0 to n_{i_{m}}. Therefore, by adding an RSA-signature-based signature to a value after the second operation that is 0 to n_{i_{m}}, at least one RSA signature is added to the signed text u_{i_{m-1}} of any value. In addition, there is a one-to-one correspondence between the value after the third operation, that is, the signature value u_{i_m}}, and the received signed text u_{i_{m-1}}, the performed signature operation can be determined uniquely by the value of the signature value u_{i_{m}} and, therefore, there is no need to add control bits as in Non-Patent Document 1.

The first effect is that the signature length does not depend on the number of signature devices. The reason is that the number of bits of the data before the signature is equal to the number of bits of the data after the signature.

The second effect is that the sequence of signature devices may be changed each time the signature is created. The reason is the same as that of the first effect, that is, the number of bits of the data before the signature is equal to the number of bits of the data after the signature. Therefore, the input to each signature device is fixed regardless of the sequence in which the signature device adds its signature, thus making it possible for the signature device to add the signature by performing the same operation regardless of the sequence.

The third effect is that an attacker, who makes bad use of a signature device, cannot forge a signed text that has passed through honest signature devices along the path. The reason is that, whatever u is input to a signature device, u is changed by at least one of two RSA calculations that are performed up to two times at the signature time.

The fourth effect is that there is no need to know the number (m) of signature devices when the system operation is started but that the operation can be performed without any problem even if the number (m) of signature devices is dynamically changed during the operation. The reason is that the signature procedure for m+1 signature devices is that another signature operation is performed in the same way after the signature procedure for m signature devices is performed, meaning that the signature operation method does not depend on the number m of signature devices.

### BRIEF DESCRIPTION OF THE DRAWINGS

FIG. 1 is a block diagram of a first embodiment of the present invention.
FIG. 2 is a block diagram showing the configuration of a signature device in the first embodiment of the present invention.
FIG. 3 is a flowchart showing the operation of the signature device in the first embodiment of the present invention.
FIG. 4 is a block diagram showing the configuration of a verification device in the first embodiment of the present invention.
FIG. 5 is a flowchart showing the operation of the verification device in the first embodiment of the present invention.
FIG. 6 is a block diagram of a second embodiment of the present invention.
FIG. 7 is a block diagram showing the configuration of a signature device in the second embodiment of the present invention.
FIG. 8 is a flowchart showing the operation of the signature device in the second embodiment of the present invention.
FIG. 9 is a block diagram showing the configuration of a verification device in the second embodiment of the present invention.
FIG. 10 is a flowchart showing the operation of the verification device in the second embodiment of the present invention.
FIG. 11 is a flowchart showing the operation of a conventional signature device.

### EXPLANATIONS OF SYMBOLS

i_{1}, ..., i_{m-1} Signature device
i_{1}-2, ..., i_{m-1}-2 Verification device
i_{1}-3, ..., i_{m-1}-3 Key storage device
i_{1}-4, ..., i_{m-1}-4 Key validity verification device
i_{1}-5, ..., i_{m-1}-5 Key generation device
M_{1}, ..., M_{m} Message
u_{i_{0}}, ..., u_{i_{m-1}} Signed text
w_{i_{0}}, ..., w_{i_{m-1}} Auxiliary information

### DETAILED DESCRIPTION

### [First example]

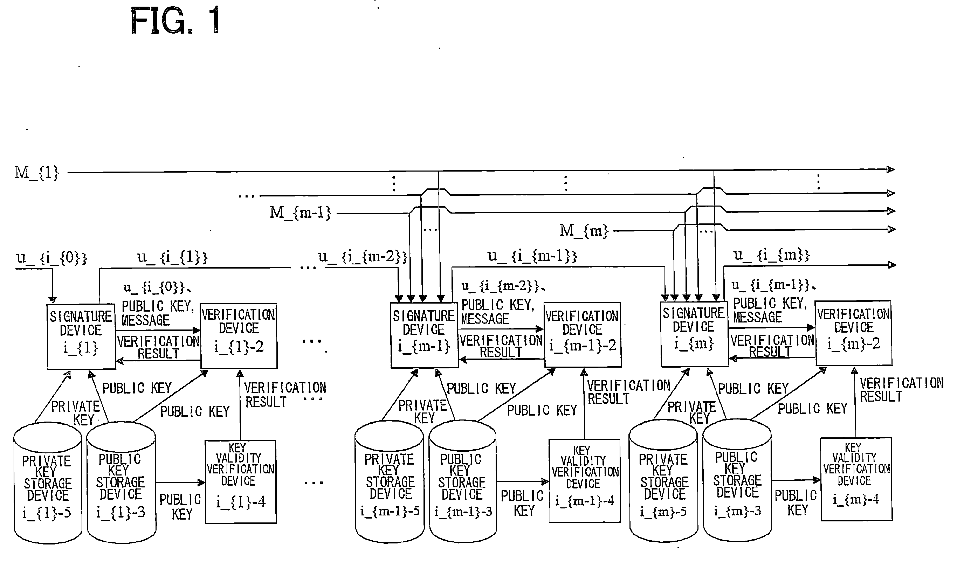

Referring to FIG. 1, a first example of the present invention comprises signature devices i_{1}, ..., i_{m}, verification devices i_{1}-2, ..., i_{m}-2, public key storage devices i_{1}-3, ..., i_{m}-3, key validity verification devices i_{1}-4, ..., i_{m}-4, and private key storage devices i_{1}-5, ..., i_{m}-5.

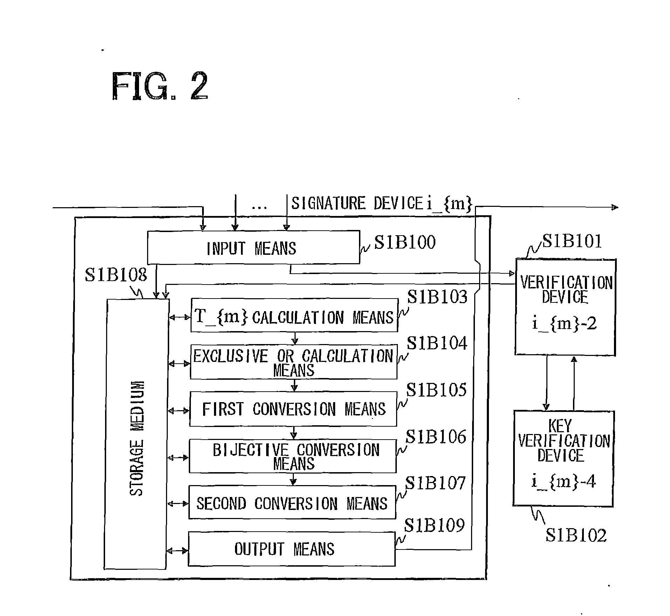

Referring to FIG. 2, the signature device i_{m} comprises input means S1B100, T_{m} calculation means S1B103, exclusive OR calculation means S1B104, first conversion means S1B105, bijective conversion means S1B106, second conversion means S1B107, a storage medium S1B108, and output means S1B109. Other signature devices have the same configuration as the signature device i_{m}.

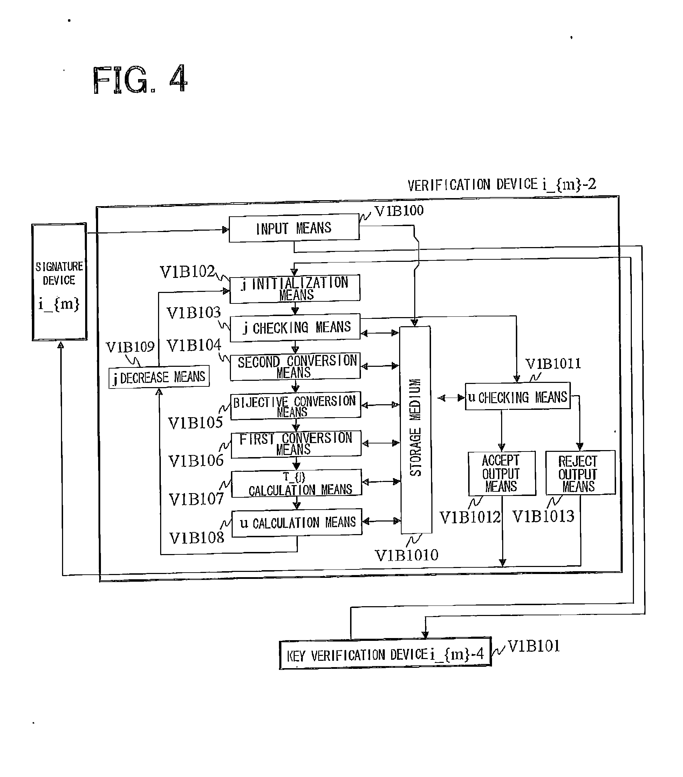

Referring to FIG. 4, the verification device i_{m}-2 comprises input means V1B100, j initialization means V1B102, j checking means V1B103, second conversion means V1B104, bijective conversion means V1B105, first conversion means V1B106, T_{j} calculation means V1B107, u calculation means V1B108, j decrease means V1B109, a storage medium V1B1010, u checking means V1B1011, accept output means V1B1012, and reject output means V1B1013. Other verification devices have the same configuration as the verification device i_{m}-2.

The following describes the overview of this embodiment. First, the public key/private key pair of the signature device i_{1}, an initial value u_{i_{0}}, and a message M_{1} are entered into the signature device i_{1}. The signature device i_{1} uses u_{i_{0}} to create a signed text u_{i_{1}} for the message M_{1}. In the same manner, the public key/private key pair of the signature device i_{j}, signed text u_{i_{j-1}} output by the immediately preceding signature device, and a message M_{j} are entered sequentially into the signature device i_{j}, and the signature device i_{j} uses them to create a signed text u_{i_{j}}. The signed text u_{i_{j}} is data representing that the signature device i_{1} signs the message M_{1}, the signature device i_{2} signs the message M_{2}, ..., and the signature device i_{j} signs the message M_{j}.

For each j, the public keys and the messages M_{1}, ..., M_{j-1} of the signature devices i_{1}, ..., i_{j} and the signed text u_{i_{j-1}} are entered into the verification device i_{j}. Then, the verification device i_{j} verifies whether or not the signed text u_{i_{j-1}} is a signed text created for the messages M_{1}, ..., M_{j-1} using the private keys of the signature devices i_{1}, ..., i_{j-1}.

The goal of the system in this embodiment is to create a signed text u_{i_{m}}, that is, data representing that the signature device i_{1} signs the message M_{1}, the signature device i_{2} signs the message M_{2}, ..., and the signature device i_{m} signs the message M_{m}.

Note that there is no need to know the number of signature devices, m, when the operation of the system in this embodiment is started. The number of signature devices, m, may be dynamically changed during the operation. The signature devices i_{1}, ..., i_{m} perform the same operation. The verification devices, the public key storage devices, the key validity verification devices, and the private key storage devices also perform basically the same operation.

Next, the following describes this embodiment more in detail.

The public key pk_{i} and the private key sk_{i} of the signature device i_{j} are (n_{i}, e_{i}) and (p_{i_{j}}, q_{i_{j}}, d_{i_{j}}) respectively and satisfy the following five properties.
1. p_{i_{j}} and q_{i_{j}} are prime numbers.
2. n_{i_{j}}=p_{i_{j}}q_{i_{j}}
3. The number of bits of n_{i_{j}} is equal to the security parameter κ.
4. The number of bits of p_{i_{j}} is almost equal to the number of bits of q_{i_{j}}.
5. e_{i_{j}} and Φ (n_{i}) are relatively prime.
6. d_{i_{j}}=e_{i_{j}}-1 mod Φ(n_{i}) where Φ(n_{i}) is the number of relatively prime integers that are one or larger and smaller than n_{i} and that are relatively prime to n_{i}. The method for creating pk_{i} and sk_{i} that satisfy those properties is described, for example, in Non-Patent Document 2 "Alfred J. Menezes Paul C. van Oorschot, and Scott A. Vanstone. Handbook of Applied Cryptography. CRC Press." (http://www.cacr.math.uwaterloo.ca/hac/).

From the viewpoint of safety, it is desirable that everyone can confirm that e_{i_{j}} and Φ(n_{i}) are relatively prime. One of the methods for making this confirmation possible is to set e_{i_{j}} to a prime number larger than n_{i}. However, e_{i_{j}} need not always satisfy this property.

For each of j=1, ..., m, the private key storage device i_{j}-5 stores the private key sk_{i_{j}}, and the public key storage device i_{j}-3 stores the public keys pk_{1}, ..., pk_{m}.

The following describes the operation of the key validity verification device i_{m}-4. The key validity verification device i_{m}-4 is a device that verifies the validity of the public keys pk_{i_{1}}, ..., pk_{i_{m-1}}. To confirm the validity, the key validity verification device first reads pk_{i_{1}}, ..., pk_{i_{m-1}} from the key storage device i_{m}-3 and confirms that pk_{i_{1}}, ..., pk_{i_{m-1}} are different to each other. When m=1, the key validity verification device does not perform any confirmation operation.

From the viewpoint of safety, although it is desirable to confirm that e_{i_{j}} and Φ(n_{i}) are relatively prime, it is also possible to omit this confirmation.

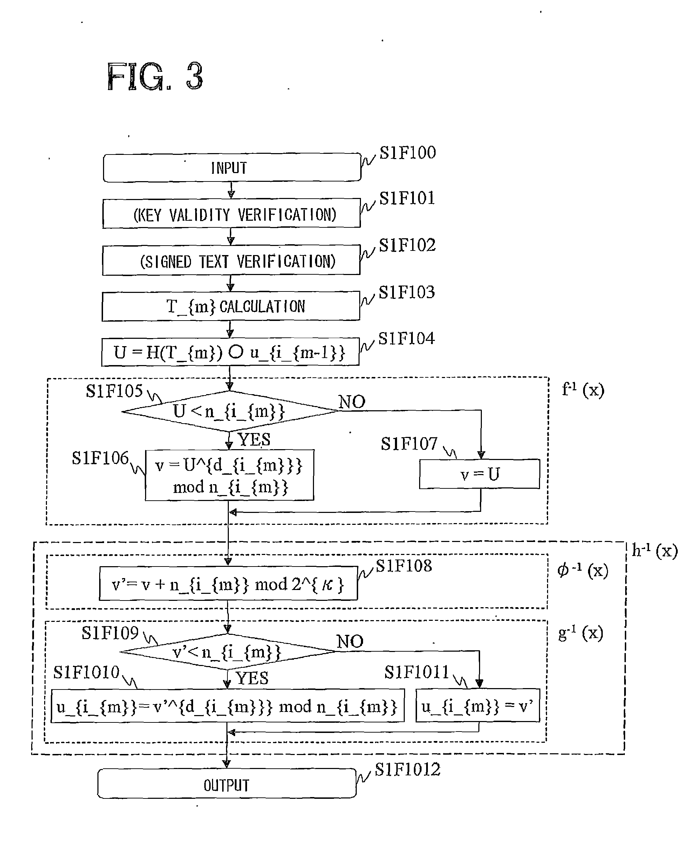

The following describes the operation of the signature device i_{m}. With reference to FIG. 2 and FIG. 3, the following describes how the signature device i_{m} signs the message M_{m} when the messages M_{1}, ..., M_{m} and the signed text u_{i_{m-1}} for the messages M_{1}, ..., M_{m-1}, created by the signature devices i_{1}, ....., i_{m-1} using the public keys pk_{i_{1}}, ..., pk_{i_{m-1}}, are entered.

First, via the input means S1B101, the signature device i_{m} reads M_{1}, ..., M_{m}, pk_{i_{1}}, ..., pk_ {i_{m}}, sk_{i_{m}}, and u_{i_{m-1}} and stores them in the storage medium S1B100 (S1F100). Note that, when m=1, u_{i_{0}}=0 is assumed.

Next, the signature device i_{m} sends u_{i_{m-1}}, M_{1}, ..., M_{m-1}, and pk_{i_{1}}, ..., pk_{i_{m-1}} to the verification device i_{m-2}. The verification device i_{m}-2 verifies the validity of the signed text u_{i_{m-1}} (S1B101, S1F102). At this time, the verification device i_{m}-2 sends pk_{i_{1}}, ..., pk_{i_{m-1}} to the key validity verification device i_{m}-4. The key validity verification device i_{m}-4 verifies the validity of the keys (S1B102, S1F101). Note that, when m=1, the key validity verification device i_{m}-4 only confirms that u_{i_{0}}=0.

Although it is desirable to perform the verification of u_{i_{m-1}} and the verification of key validity described above from the viewpoint of safety, one of the operations or both operations may be omitted to increase efficiency.

Next, via the T_{m} calculation means S1B103, the signature device i_{m} reads necessary data from the storage medium S1B108 and calculates T_{m} = M_{1}∥...∥M_{m}∥pκ_{i_{1}}∥...∥pk_{i_{m}} (S1F103). After the calculation, the T_{m} calculation means S1B103 writes the calculation result into the storage medium S1B108.

Next, via the exclusive OR means S1B104, the signature device i_{m} reads necessary data from the storage medium S1B108, calculates U=H(T_{m})ou_{i_{m-1}}, and writes the calculation result into the storage medium S1B108 (S1F104). H is the hash function that outputs the hash value of the same number of bits as that of the input.

Next, via the first conversion means S1B105, the signature device i_{m} reads data, entered into the signature device i_{m}, from the storage medium S1B108 and first checks if U is smaller than n_{i_{m}} (S1F105). If U<n_{i_{m}}, the signature device i_{m} calculates v=u^{d_{i_{m}}} mod n_{i_{m}} via the first conversion means S1B105, and writes the calculation result into the storage medium S1B108 (S1F106). Conversely, if U≥n_{i_{m}}, the signature device i_{m} performs the calculation v=u via the first conversion means S1B105 and writes the calculation result into the storage medium S1B108 (S1F107).

Next, via the bijective conversion means S1B106, the signature device i_{m} reads necessary data from the storage medium S1B108, calculates v'=v+n_{i_{m}} mod 2^{κ}, and writes the calculation result into the storage medium S1B108 (S1F108).

Next, via the second conversion means S1B107, the signature device i_{m} reads necessary data from the storage medium S1B108 and checks if v' is smaller than n_{i_{m}} (S1F109). If v'<n_{i_{m}}, the signature device i_{m} calculates u_{i_{m}}=v'^{d_{i_{m}}} mod n_{i_{m}} and writes the calculation result into the storage medium S1B108 (S1F1010). Conversely, if v'≥n_{i_{m}}, the signature device i_{m} calculates u_{i_{m}}=v' via the second conversion means S1B107 and writes the calculation result into the storage medium S1B108 (S1F1011).

Finally, via the output means S1B109, the signature device i_{m} reads u_{i_{m}} from the storage medium S1B108 and outputs it (S1F1012).

As described above, the signature device i_{m} checks if the received signed text u_{i_{m-1}} exceeds the modulus n_{i_{m}}. The signature device i_{m} performs no operation if the received signed text u_{i_{m-1}} exceeds the modulus n_{i_{m}} but performs the first operation, in which an RSA-based signature is added, if the received signed text u_{i_{m-1}} does not exceed the modulus n_{i_{m}}. The signature device i_{m} performs the second operation, in which the result of the first operation is multiplied by the function that maps the result to a value larger by modulus n_{i_{m}}. The signature device i_{m} checks if the result of the second operation exceeds modulus n_{i_{m}}, and performs no operation if the result exceeds the modulus n_{i_{m}} but performs the RSA-based third operation to add the signature if the result does not exceed the modulus n_{i_{m}}. Although the RSA signature operation is redundantly performed twice depending upon the value of the signed text u_{i_{m-1}}, the signature operation that is performed can be uniquely determined by the value of the signature value u_{i_{m}} and, therefore, there is no need to add control bits as in the method described in Non-Patent Document 1.

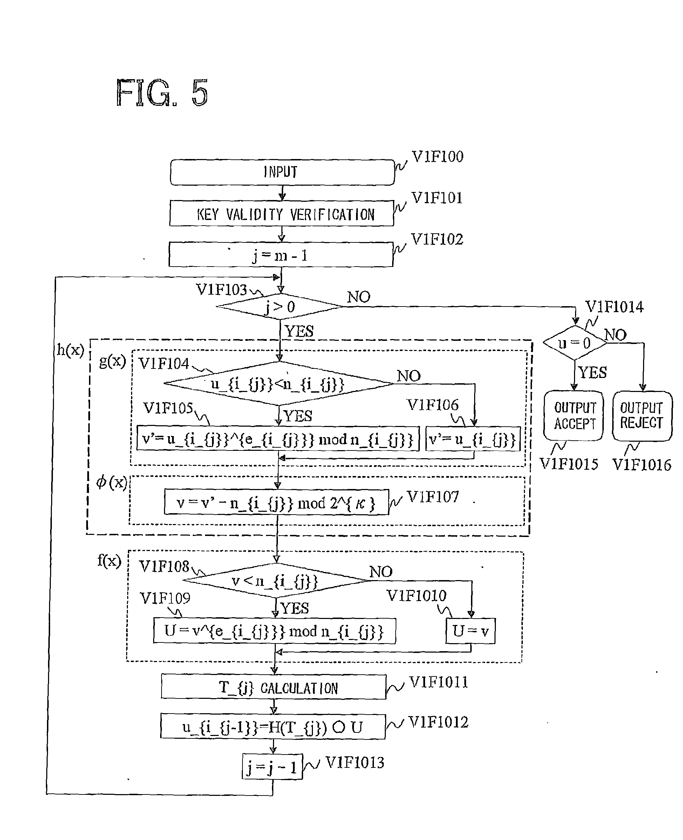

Next, with reference to FIG. 4 and FIG. 5, the following describes how the verification device i_{m}-2 verifies the signed text u_{m-1}.

First, via the input means V1B100, the verification device i_{m}-2 reads pk_{i_{1}}, ..., pk_{i_{m-1}} from the public key storage device i_{m}-3 and, in addition, reads messages M_{1}, ..., M_{m-1} (V1F100). The data that is read is written into the storage medium V1B1010 by the input means V1B100.

Next, the verification device i_{m}-2 sends the pk_{i_{1}}, ..., pk_{i_{m-1}} to the key verification device i_{m}-4 via the input means V1B100 to request it to verify the validity of the public keys pk_{i_{1}}, ..., pk_{i_{m-1}} (V1B101, V1F101).

Next, to sequentially verify the signature devices in reverse order from the immediately-preceding signature device to the first signature device, the verification device i_{m}-2 sets m-1 in the variable j, which manages which message in which signature device is being verified, via the j initialization means V1B102 (V1F102).

Next, the verification device i_{m}-2 checks if j>0 via the j checking means V1B103 (V1P103).

The following describes the operation of the verification device i_{m}-2 when j>0. The operation performed when j>0 is not satisfied will be described later.

Next, via the second conversion means V1B104, the verification device i_{m}-2 first reads necessary data from the storage medium V1B1010 and checks if u_{i_{j}}<n_{i_{j}} (V1F104).

If u_{i_{j}}<n_{i_{j}}, the verification device i_{m}-2 calculates v'=u_{i_{j}}^{e_{i_{j}}} mod n_{i_{j}} and writes the calculation result into the storage medium V1B1010 (V1F105) via the second conversion means V1B104.

Conversely, if u_{i_{j}}<n_{i_{j}} is not satisfied, the verification device i_{m}-2 sets v'=u_{i_{j} and writes the calculation result into the storage medium V1B1010 via the second conversion means V1B104 (V1F106).

Next, via the bijective conversion means V1B105, the verification device i_{m}-2 reads necessary data from the storage medium V1B1010, calculates v=v'-n_{i_{m}} mod 2^{κ}, and writes the calculation result into storage medium V1B1010 (V1F107).

Next, via the first conversion means V1B106, the verification device i_{m}-2 reads necessary data from the storage medium V1B1010 and first checks if v<n_{i_{j}} (V1F108).

If v<n_{i_{j}}, the verification device i_{m}-2 calculates U=v^{e_{i_}j}}} mod n_{i_{j}} and writes the calculation result into the storage medium V1B1010 via the first conversion means V1B106 (V1F109).

On the other hand, if v<n_{i_{j}} is not satisfied, the verification device i_{m}-2 performs the calculation U=v and writes the calculation result into the storage medium V1B1010 via the first conversion means V1B106 (V1F1010).

Next, via the T_{j} calculation means V1B107, the verification device i_{m}-2 reads necessary data from the storage medium V1B1010, calculates T_{j}=M_{1}∥...∥M_{j}∥pk_{i_{1}}∥...∥pk_{i_{j}}, and writes the calculation result into the storage medium V1B1010 (V1F1011).

Next, via the u calculation means V1B108, the verification device i_{m}-2 reads necessary data from the storage medium V1B1010, calculates u_{i_{j-1}}=H(T_{j})oU, and writes the calculation result into the storage medium V1B1010 (V1F1012).

Next, the verification device i_{m}-2 sets j=j-1 via the j decrease means V1B109 (V1F1013).

The verification device i_{m}-2 checks if j>0 again via the j checking means V1B103 (V1F103).

If j>0, the verification device i_{m}-2 performs the processing in step V1F104 and the following steps.

If j=0, the verification device i_{m}-2 reads necessary data from the storage medium V1B1010 and checks if u=0 via the u checking means V1B1011 (V1F1014).

If u=0, the verification device i_{m}-2 outputs accept, which indicates successful verification, via the accept output means V1B1012 (V1F1015); otherwise, the verification device i_{m}-2 outputs reject, which indicates unsuccessful verification, via the reject output means V1B1013 (V1F1016).

Now, let f(x), g(x), and ϕ(x) be the operations enclosed by the dotted line in FIG. 5.
That is,
f(x)=x^{e_{i_{j}}} mod n_{i_{j}} if x<n_{i_{j}} =x otherwise.
g(x)=x^{e_{i_{j}}} mod n_{i_{j}} if x<n_{i_{j}} =x otherwise.
ϕ(x)=x+n_{i_{j}} mod 2^{κ}
h(x)=g(ϕ(x))

Then, the operations f^{-1}(x), g^{-1}(x), h^{-1}(x), and ϕ^{-1}(x) in the part enclosed by the dotted line in FIG. 3 are the inverse functions of f(x), g(x), h(x), and ϕ(x), respectively.

Therefore, the signature device i_{m} in this embodiment creates a signed text using the calculation expression u_{i_{m}}=(g_{m}^{-1}(ϕ^{-1}(f_{m}^{-1}(H(T_{m})ou_{i_{m-1} })))). The verification device i_{m}-2 in this embodiment finds the signed text that is entered into the immediately preceding signature device using u_{i_{m-2}}=H(T_{m-1})o(f_{m-1}(ϕ(g_{m-1}(u_{i_{m-1}})))), finds the initial value of the input by repeating the same processing until the first signature device is reached, and checks if the initial value that is found matches the predetermined initial value (value of 0 in this embodiment).

Next, the following describes the effect of this embodiment.

The first effect is that the signature length does not depend on the number of signature devices. The reason is that the number of bits of the data before the signature is equal to the number of bits of the data after the signature.

The second effect is that the sequence of signature devices may be changed each time the signature is created. The reason is the same as that of the first effect, that is, the number of bits of the data before the signature is equal to the number of bits of the data after the signature. Therefore, the input to each signature device is fixed regardless of the sequence in which the signature device adds its signature, thus making it possible for the signature device to add the signature by performing the same operation regardless of the sequence. However, it is necessary to notify the verification device about the sequence in which the signature is added.

The third effect is that an attacker, who makes bad use of a signature device, cannot forge a signed text that has passed through honest signature devices along the path. The reason is that, whatever u is input to a signature device, u is changed by at least one of two RSA calculations that are performed at the signature time.

The fourth effect is that there is no need to know the number (m) of signature devices when the system operation is started but that the operation can be performed without any problem even if the number (m) of signature devices is dynamically changed during the operation. The reason is that the signature procedure for m+1 signature devices is that another signature operation is performed in the same way after the signature procedure for m signature devices is performed, meaning that the signature operation method does not depend on the number m of signature devices.

In the first embodiment described above, the RSA function, which is the most typical function, is used in the description. More generally, a signature method in which the signature length does not depend on the number of signers and which ensures safety can be implemented in the same way as in the first embodiment if there is a subset X having {0,1}^{κ} and if the conditions (1) and (2) described below are satisfied.
(1) f and g are trapdoor one-way replacements, and X is included in both the domain of f and the domain of g.
(2) ϕ is a bisection on {0,1}^{κ} where both ϕ and ϕ^{-1} can be calculated in polynomial time, and {0,1}^{κ}\ X is mapped to X.
The trapdoor one-way replacement is a function that satisfies the following four properties:
1) Is easy to calculate f.
2) Is difficult for a person, who does not know the trapdoor (also called a private key), to calculate f^{-1}.
3) Is easy for a person, who knows the trapdoor, to calculate f^{-1}.
4) Is a bijection.

In addition, if there is a subset X having {0,1}^{κ} and if the conditions (1) and (2) described below are satisfied, a signature method in which the signature length does not depend on the number of signers and which ensures safety can be implemented in the same way as in the first embodiment.
(1) f is a trapdoor one-way replacement, and X is included in the domain of f.
(2) h is a trapdoor one-way replacement, and {0,1}^{x}\ X is included in the domain of h.

### [Second example]

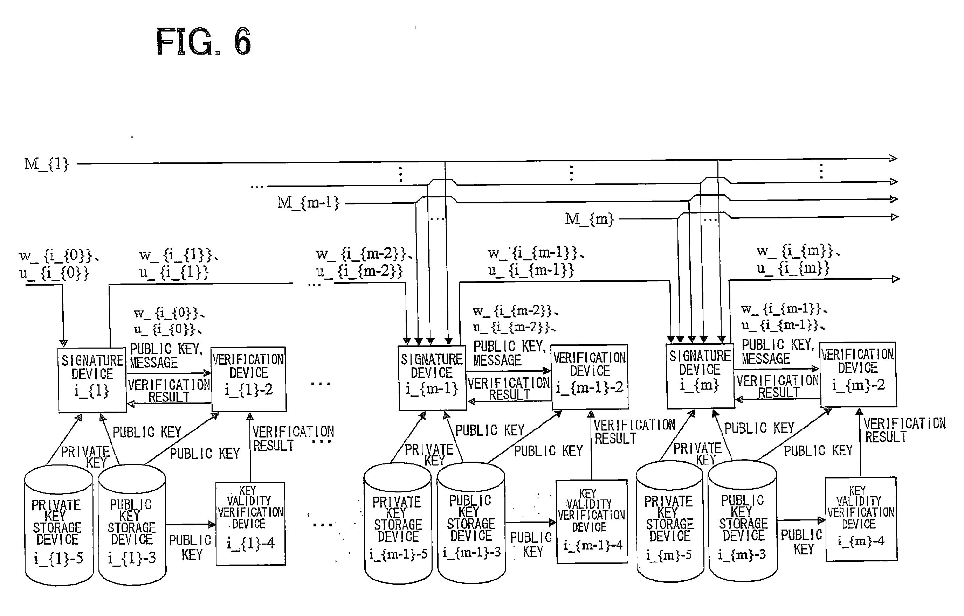

Referring to FIG. 6, a second example of the present invention comprises signature devices i_{1}, ..., i_{m}, verification devices i_{1}-2, ..., i_{m}-2, public key storage devices i_{1}-3, ..., i_{m}-3, key validity verification devices i_{1}-4, ..., i_{m}-4, and private key storage devices i_{1}-5, ..., i_{m}-5.

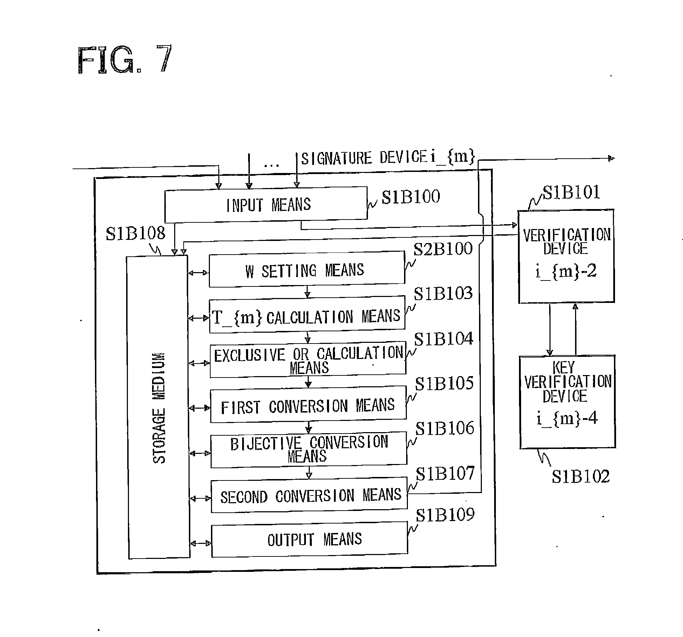

Referring to FIG. 7, the signature device i_{m} comprises input means S1B100, T_{m} calculation means S1B103, exclusive OR calculation means S1B104, first conversion means S1B105, bijective conversion means S1B106, second conversion means S1B107, a storage medium S1B108, output means S1B109, and w setting means S2B100. Other signature devices have the same configuration as the signature device i_{m}.

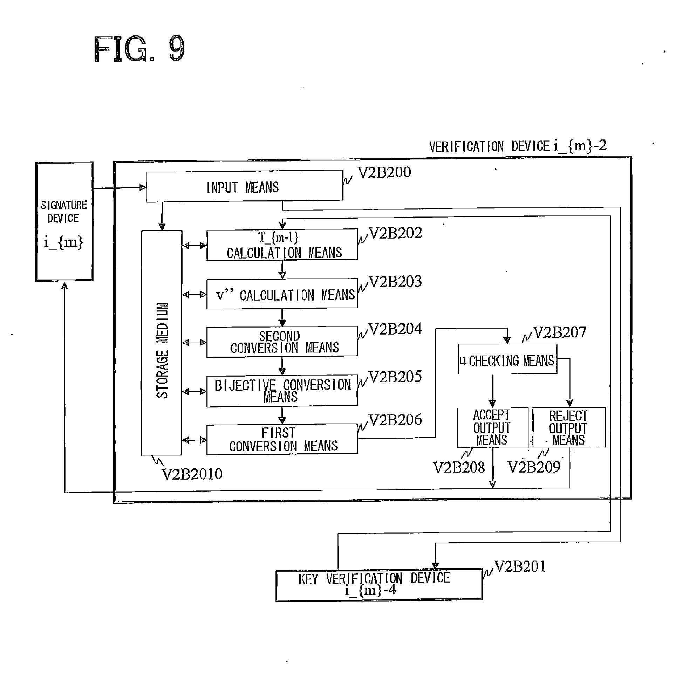

Referring to FIG. 9, the verification device i_{m}-2 comprises input means V2B200, T_{m-1} calculation means V2B202, v" calculation means V2B203, second conversion means V2B204, bijective conversion means V2B205, first conversion means V2B206, u checking means V2B207, accept output means V2B208, reject output means V2B209, and a storage medium V2B2010. Other verification devices have the same configuration as the verification device i_{m}-2.

The following describes the overview of this embodiment. First, the public key/private key pair of the signature device i_{1}, an initial value u_{i_{0}}, and a message M_{1} are entered into the signature device i_{1}. The signature device i_{1} uses u_{i_{0}} to create a signed text u_{i_{1}} for the message M_{1}, creates auxiliary information w_{i_{1}} from the initial value u_{i_{0}}, and outputs the pair of u_{i_{1}} and w_{i_{1}}. Next, the public key/private key pair of the signature device i_{2}, the pair of u_{i_{1}} and w_{i_{1}}, and a message M_{2} are entered into the signature device i_{2}. The signature device i_{2} uses u_{i_{1}} to create a signed text u_{i_{2}} for the message M_{2}, creates auxiliary information w_{i_{2}} from u_{i_{1}}, and outputs the pair of u_{i_{2}} and w_{i_{2}}. In the same manner, the public key/private key pair of the signature device i_{j}, the signed text u_{i_{j-1}} and the auxiliary information w_{i_{j-1}} that are output by the immediately preceding signature device, and a message M_{j} are entered sequentially into the signature device i_{j}, and the signature device i_{j} uses them to create the pair of a signed text u_{i_{j}} and auxiliary information w_{i_{j}}. u_{i_{j}}, which is the same signed text as that in the first embodiment, is data representing that the signature device i_{1} signs the message M_{1}, the signature device i_{2} signs the message M_{2}, ..., and the signature device i_{j} signs the message M_{j}.

w_{i_{j}} is auxiliary information that makes the verification of signed text u_{i_{j}} easy and, in this embodiment, the auxiliary information is the signed text u_{i_{j-1}} that is the input to the signature device i_{j}. For each j, when the public keys of the signature devices i_{1}, ..., i_{j}, the messages M_{1}, ..., M_{j-1}, and u_{i_{j-1}} and w_{i_{j-1}} are entered into the verification device i_{j}, the verification device i_{j} verifies if u_{i_{j-1}} is a signed text, created for the messages M_{1}, ..., M_{j-1} using the public keys of the signature devices i_{1}, ..., i_{j-1}, based on the auxiliary information w_{i_{j-1}}.

As in the first embodiment, the goal of the system in this embodiment is to create a signed text u_{i_{m}}, that is, data representing that the signature device i_{1} signs the message M_{1}, the signature device i_{2} signs the message M_{2}, ..., and the signature device i_{m} signs the message M_{m}.

Note that, as in the first embodiment, there is no need to know the number of signature devices, m, when the operation of the system in this embodiment is started. The number of signature devices, m, may be dynamically changed during the operation. The signature devices i_{1}, ..., i_{m} perform the same operation. The verification devices, the public key storage devices, the key validity verification devices, and the private key storage devices also perform basically the same operation.

Next, the following describes the detail of this embodiment with focus on the difference from the first embodiment.

The public key pk_{i} and the private key sk_{i} of the signature device i_{j} are created in the same way as in the first embodiment. For each of j=1, ..., m, the private key storage device i_{j}-5 stores the private key sk_{i_{j}}, and the public key storage device i_{j}-3 stores the public keys pk_{1}, ..., pk_{m}.

The key validity verification device performs the same operation as in the first embodiment.

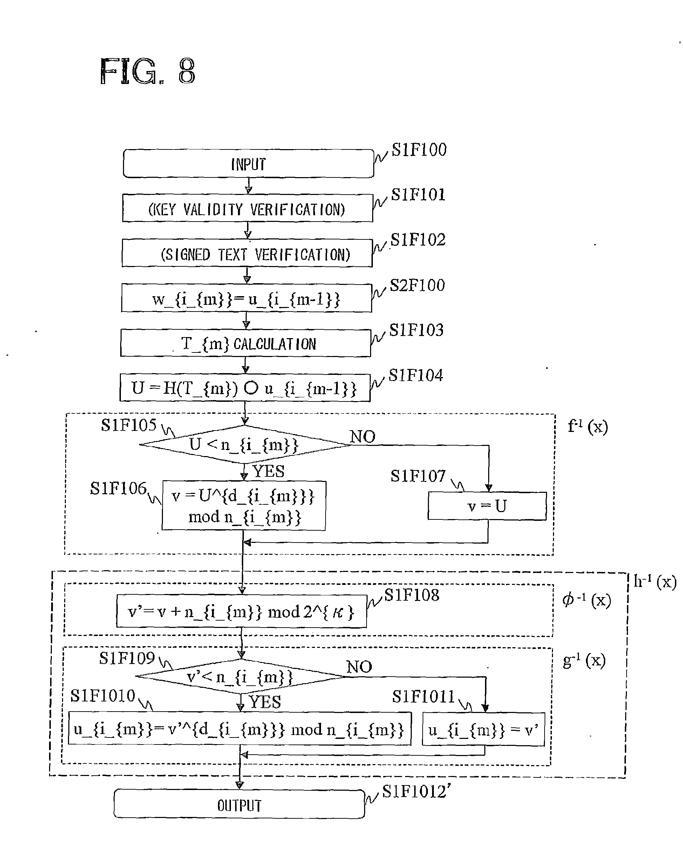

The method, which is used by the signature device i_{m} to sign the message M_{m} when the messages M_{1}, ..., M_{m}, the signed text u_{i_{m-1}} created by the signature devices i_{1}, ..., i_{m-1} for the messages M_{1}, ..., M_{m-1} using the public keys pk_{i_{1}}, ..., pk_{i_{m-1}}, and the auxiliary information w_{i_{_}m-1}} are entered into the signature device i_{m}, is similar to that of the first embodiment except that the procedure for creating the auxiliary information is added. The following describes this method with reference to FIG. 7 and FIG. 8. In this embodiment, the signature device i_{m} calculates w_{i_{m} }=u_{i_{m-1}} after the processing in step S1F102 via the w setting means S2B100 and writes the calculation result into the storage medium S1B108 (S2F100). The auxiliary information w_{i_{m}} written into the storage medium S1B108, as well as the signed text u_{i_{m}}, created according to the same procedure as that of the first embodiment and written into the storage medium S1B108, is read by the output means S1B109 and is output (S1F10102').

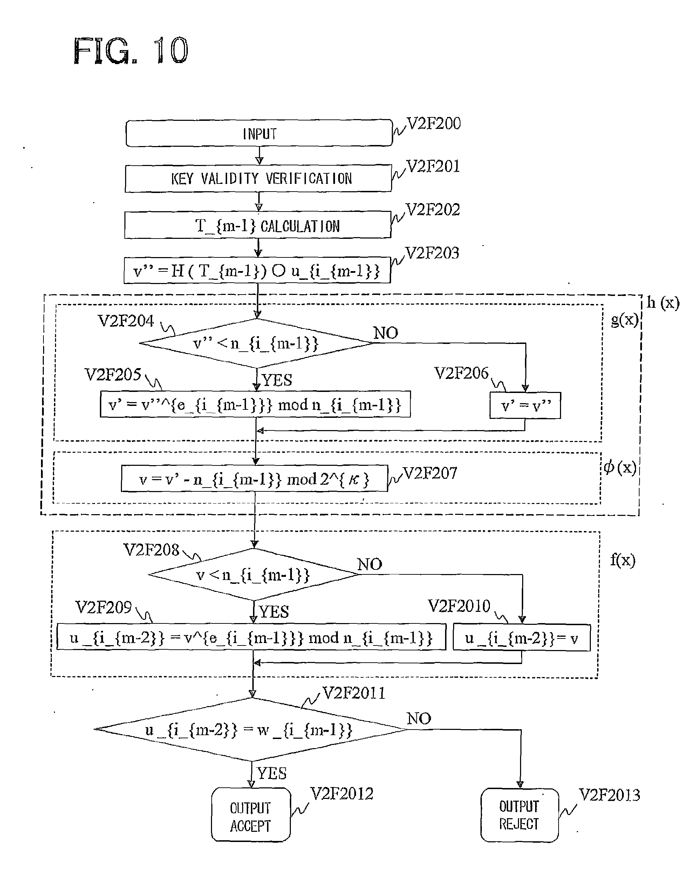

Next, with reference to FIG. 9 and FIG. 10, the following describes the method used by the verification device i_{m}-2 to verify the signed text u_{m-1}.

First, via the input means V2B200, the verification device i_{m}-2 reads pk_{i_{1}}, ..., pk_{i_{m-1}} from the public key storage device i_{m}-3, reads the messages M_{1}, ..., M_{m-1}, and saves them into the storage medium V2B2010 (V2F200).

Next, via the input means V2B200, the verification device i_{m}-2 sends pk_{i_{1}}, ..., pk_{i_{m-1}} to the key verification device i_{m}-4 and requests it to verify the validity of the public keys pk_{i_{1}}, ..., pk_{i_{m-1}} (V2F201).

Next, via the T_{m-1} calculation means V2B202, the verification device i_{m}-2 reads necessary data from the storage medium V2B2010, calculates T_{m-1} = M_{1}∥...∥M_{m-1}∥pk_{i_{1}}∥...∥pk_{i-{m-1}}, and saves the calculation result T_{m-1} into the storage medium V2B2010 (V2F202).

Next, via the v" calculation means V2B203, the verification device i_{m}-2 reads necessary data from the storage medium V2B2010, calculates v"=H(T_{m-1})ou_{i_{m-1}}, and saves the calculation result v" into the storage medium V2B2010 (V2F203).

Next, via the second conversion means V2B204, the verification device i_{m}-2 reads necessary data from the storage medium V2B2010 and checks if v"<n_{i_{m-1}} (V2F204). If v"<n_{i_{m-1}}, the verification device i_{m}-2 calculates v'=v"^{e_{i_{m-1}}} mod n_{i_{m-1}} via second conversion means V2B204 and saves the calculation result v' into the storage medium V2B2010 (V2F205). On the other hand, if v"<n_{i_{m-1}} is not satisfied, the verification device i_{m}-2 performs the calculation with v'=v" and saves the calculation result v' into the storage medium V2B2010 (V2F206).

Next, via the bijective conversion means V2B205, the verification device i_{m}-2 reads necessary data from the storage medium V2B2010, calculates v=v'-n_{i_{m-1}} mod 2^{κ}, and saves the calculation result v into the storage medium V2B2010 (V2F207).

Next, via the first conversion means V2B206, the verification device i_{m}-2 reads necessary data from the storage medium V2B2010 and checks if v<n_{i_{m-1}} (V2F208). If v<n_{i_{m-1}}, the verification device i_{m}-2 calculates u_{i_{m-2}}=v^{e_{i_{m-1}}} mod n_{i_{m-1}}} via the first conversion means V2B206 and saves the calculation result u_{i_{m-2}} into the storage medium V2B2010 (V2F209). On the other hand, if u_{i_{m-2}}<n_{i_{{m-1}} is not satisfied, the verification device i_{m}-2 performs the calculation with u_{i_{m-1}}}=v and saves the calculation result u_{i_{m-2}} into the storage medium V2B2010 (V2F2010).

Next, via the u checking means V2B2007, the verification device i_{m}-2 reads necessary data from the storage medium V2B2010 and checks if u_{i_{m-2}}}=w_{i_{m-1}} (V2F2011). If u_{i_{m-2}}}=w_{i_{m-1}}, the verification device i_{m}-2 outputs accept via the accept output means V2B208 (V2F2012); otherwise, the verification device i_{m}-2 outputs reject via the reject output means V2B209 (V2F2013).

Next, the following describes the effects of this embodiment.

The first effect is that the signature length does not depend on the number of signature devices. The reason is that the number of bits of the data before being signed is equal to the number of bits of the data after being signed. However, the data is longer than that in the first embodiment by the length of the auxiliary information.

The second effect is that the calculation amount required for the verification calculation is less than that in the first embodiment. The reason is that, while the first embodiment requires the verification calculation proportional to the number of signature devices that have signed because the initial value must finally be obtained, this embodiment is required to perform verification calculation only for one signature device because the signed text that is input to the immediately preceding signature device is passed as the auxiliary information. Note that this embodiment assumes that the immediately preceding signature device is reliable. Therefore, the safety of this embodiment is lower than that of the first embodiment that assures safety without such an assumption.

The other effects of the first embodiment are also achieved.

Although the signed text u_{i_{j-1}} that is input to the signature device i_{j} is used as the auxiliary information w_{i_{j}}, which is paired with the signed text u_{i_{j}}, in this embodiment, it is also possible that the hash value h(u_{i_{j-1}}) of u_{i_{j-1}} is used as the auxiliary information w_{i_{j}} where h is a predetermined hash function that outputs a hash value of the same number of bits as that of the input. The additional changes that are made to the first embodiment are also possible in this embodiment.

While the preferred embodiments of the present invention have been described, it is to be understood that the present invention is not limited to the embodiments but various additional changes are possible. The function of the signature device and the verification device of the present invention can be implemented not only by hardware but also by a computer program. The program, recorded in a computer readable recording medium such as a magnetic disk or semiconductor memory for distribution, is read by a computer when the computer is started. The operation of the computer is controlled to allow the computer to function as the signature device and the verification device described in the embodiments.

## Claims

1. A verification method comprising the steps of:
a) receiving, by input means, a signed text u_{i_{m-1}}, which is created by one or more other signature devices that sequentially perform a signature operation, auxiliary information v_{i_{m-1}} that is a signed text entered by an immediately preceding signature device or a hash value thereof, messages M_{1}, ..., M_{m-1} entered into the signature devices, and public keys pk_{i_{1}}, ..., pk_{i_{m-1}} of the signature devices and saving the signed text, the auxiliary information, the messages, and the public keys into a storage medium;
b) calculating, by T_{m-1} calculation means, T_{m-1)=M_{1}∥ ... ∥M_{m-1}∥pk_{i_{1}}∥... ∥pk_{i_{m-1}}, based on data read by the T_{m-1} calculation means from said storage medium, and saving the calculation result into said storage medium;
c)calculating, by v" calculation means, v"=H(T_{m-1})ou_{i_{m-1}}, based on data read by the v" calculation means from said storage medium, and saving the calculation result into said storage medium;
d)calculating, by second conversion means, v'=v"^{e_{i_{m-1}}} mod n_{i_{m-1}} if v"<n_{i_{m-1}}, or v'=v" if V">n_{i_{m-1}}, based on data read by the second conversion means from said storage medium, and saving the calculation result into said storage medium;
e) calculating, by bijective calculation means, v=v'-n_{i_{m-1}} mod 2^{κ}, based on data read by the first bijective calculation means from said storage medium, and saving the calculation result into the storage medium;
f)calculating, by first conversion means, u_{i_{m-2)}=v^{e_{i_{m-1}}} mod n_{i_{m-1}} if v<n_{i_{m-1}}, or u_{i_{m-2}}=v if v≥n_{i_{m-1}}, based on data read by the first conversion means from said storage medium, and saving the calculation result into said storage medium;
g)checking, by u checking means, if u_{i_{m-2}} or a hash value thereof matches the auxiliary information v_{i_{m-1}}; and
h) outputting, by output means, a verification success notification if u_{i_{m-2}} or a hash value thereof matches the auxiliary information v_{i_{m-1}} and, if not, outputting a verification failure notification.

2. A verification device comprising:
a readable/writable storage medium;
input means that receives a signed text u_{i_{m-1}}, which is created by one or more other signature devices that sequentially perform a signature operation, auxiliary information v_{i_{m-1}} that is a signed text entered by an immediately preceding signature device or a hash value thereof, messages M_{1}, ..., M_{m-1} entered into the signature devices, and public keys pk_{i_{1}}, ..., pk_{i_{m-1}} of the signature devices and saves the signed text, the auxiliary information, the messages, and the public keys into said storage medium;
T_{m-1} calculation means that calculates T_{m-1}=M_{1}∥ ... ∥ M_{m-1} ∥ pk_{i_{1}}∥ ... ∥pk_{i_{m-1}}, based on data read by the T_{m-1} calculation means from said storage medium, and that saves the calculation result into said storage medium;
v" calculation means that calculates v"=H(T_{m-1})ou_{i_{m-1}}, based on data read by the v" calculation means from said storage medium, and that saves the calculation result into said storage medium;
second conversion means that calculates v'=v"^{e_{i_{m-1}}} mod n_{i_{m-1}} if v"<n_{i_{m-1}}, and that calculates v'=v" if V">n_{i_{m-1}}, based on data read by the second conversion means from said storage medium, and that saves the calculation result into said storage medium;
bijective calculation means that calculates v=v'-n_{i_{m-1}} mod 2^{κ}, based on data read by the bijective calculation means from said storage medium, and that saves the calculation result into the storage medium;
first conversion means that calculates
u_{i_{m-2}}=v^{e_{i_{m-1}}} mod n_{i_{m-1}} if v<n_{i_{m-1}}, and that calculates u_{i_{m-2}}=v if v≥n_{i_{m-1}}, based on data read by the first conversion means from said storage medium, and that saves the calculation result into said storage medium;
u checking means that checks if u_{i_{m-2}} or a hash value thereof matches the auxiliary information v_{i_{m-1}}; and
output means that outputs a verification success notification if u_{i_{m-2}} or a hash value thereof matches the auxiliary information v_{i_{m-1}} and, if not, outputs a verification failure notification.

3. A program that causes a computer having a readable/writable storage medium to function as:
input means that receives a signed text u_{i_{m-1}}, which is created by one or more other signature devices that sequentially perform a signature operation, auxiliary information v_{i_{m-1}} that is a signed text entered by an immediately preceding signature device or a hash value thereof, messages M_{1}, ..., M_{m-1} entered into the signature devices, and public keys pk_{i_{1}}, ..., pk_{i_{m-1}} of the signature devices and saves the signed text, the auxiliary information, the messages, and the public keys into said storage medium;
T_{m-1} calculation means that calculates T_{m-1}=M_{1} ∥ ... ∥ M_{m-1}∥ pk_{i_(1}} I I ... ∥pk_{i_{m-1}}, based on data read by the T_{m-1} calculation means from said storage medium, and that saves the calculation result into said storage medium;
v" calculation means that calculates v"=H(T_{m-1}) o u_{i_{m-1}}, based on data read by the v" calculation means from said storage medium, and that saves the calculation result into said storage medium;
second conversion means that calculates
v'=v"^{e_{i_{m-1}}} mod n_{i_{m-1}} if v"<n_{i_{m-1}}, and that calculates v'=v" if V"≥n_{i_{m-1}}, based on data read by the second conversion means from said storage medium, and that saves the calculation result into said storage medium;
bijective calculation means that calculates v=v'-n_{i_{m-1}} mod 2^{κ}, based on data read by the bijective means from said storage medium, and that saves the calculation result into the storage medium;
first conversion means that calculates
u_{i_{m-2}}=v^{e_{i_{m-1}}} mod n_{i_{m-1}} if v<n_{i_{m-1}}, and that calculates u_{i_{m-2}}=v if v≥n_{i_{m-1}}, based on data read by the first conversion means from said storage medium and that saves the calculation result into said storage medium;
u checking means that checks if u_{i_{m-2}} or a hash value thereof matches the auxiliary information v_{i_{m-1}}; and
output means that outputs a verification success notification if u_{i_{m-2}} or a hash value thereof matches the auxiliary information v_{i_{m-1}} and, if not, outputs a verification failure notification.

## Patentansprüche

1. Verifikationsverfahren, das die folgenden Schritte beinhaltet:
a) Empfangen, über Eingabemittel, eines signierten Texts u_{i_{m-1}}, der durch ein oder mehrere andere Signaturgeräte erzeugt wird, die nacheinander eine Signaturoperation durchführen, von Zusatzinformationen v_{i_{m-1}}, die ein von einem unmittelbar vorhergehenden Signaturgerät eingegebener signierter Text oder ein Hash-Wert davon ist, von Nachrichten M_{1}, ... , M_{m-1}, die in die Signaturgeräte eingegeben wurden, und von öffentlichen Schlüsseln pk_{i_{1}}, ..., pk_{i_{m-1}} der Signaturgeräte, und Speichern des signierten Texts, der Zusatzinformationen, der Nachrichten und der öffentlichen Schlüssel in einem Speichermedium;
b) Berechnen, durch T_{m-1} Rechenmittel, von T_{m-1}=M_{1}∥...∥M_{m-1}∥pk_{i_{1}}∥...∥pk_{i_{m-1}} auf der Basis von Daten, die von den T_{m-1} Rechenmitteln aus dem genannten Speichermedium gelesen wurden, und Speichern des Rechenergebnisses in dem genannten Speichermedium;
c) Berechnen, mit v" Rechenmitteln, von v"=H(T_{m-1}) ou_{i_{m-1}} auf der Basis von Daten, die von den v" Rechenmitteln aus dem genannten Speichermedium gelesen wurden, und Speichern des Rechenergebnisses in dem genannten Speichermedium;
d) Berechnen, mit dem zweiten Konversionsmittel, von v'=v"^{e_{i_{m-1}}} mod n_{i_{m-1}} falls v"<n_{i_{m-1}), oder v'=v" falls v"≥n_{i_{m-1}}, auf der Basis von Daten, die von dem zweiten Konversionsmittel aus dem genannten Speichermedium gelesen wurden, und Speichern des Rechenergebnisses in dem genannten Speichermedium;
e) Berechnen, durch bijektive Rechenmittel, von v=v"-n_{i_{m-1}} mod 2^{κ} auf der Basis von Daten, die von dem ersten bijektiven Rechenmittel aus dem genannten Speichermedium gelesen wurden, und Speichern des Rechenergebnisses in dem Speichermedium;
f) Berechnen, mit dem ersten Konversionsmittel, von u_{i_{m-2}}=v^{e_{i_{m-1}} mod n_{i_{m-1}} falls v<n_{i_{m-1}}, oder u_{i_{m-1}}=v falls v ≥ n_{i_{m-1}}, auf der Basis von Daten, die vom ersten Konversionsmittel aus dem genannten Speichermedium gelesen wurden, und Speichern des Rechenergebnisses in dem genannten Speichermedium;
g) Prüfen, mit u Prüfmitteln, ob u_{i_{m-2}} oder ein Hash-Wert davon mit den Zusatzinformationen v_{i_{m-1}} übereinstimmt; und
h) Ausgeben, mit Ausgabemitteln, einer Verifikationerfolgreich-Mitteilung, wenn u_{i_{m-2}} oder ein Hash-Wert davon mit den Zusatzinformationen v_{i_{m-1}} übereinstimmt, und wenn nicht, Ausgeben einer Verifikationerfolglos-Mitteilung;
wobei "H" die Verkettung von Bitstrings bedeutet, "o" das Exklusiv-ODER auf einer Bitbasis bedeutet, "^" den arithmetischen Operator zum Potenzieren des linken Operanden mit dem Exponenten im rechten Operanden bedeutet, "_{x}" repräsentiert, dass x ein Subskript ist.

2. Verifikationsgerät, das Folgendes umfasst:
ein lesbares/beschreibbares Speichermedium;
Eingabemittel, die Folgendes empfangen, einen signierten Text u_{i_{m-1}}, der durch ein oder mehrere andere Signaturgeräte erzeugt wird, die sequentiell eine Signaturoperation durchführen, Zusatzinformationen v_{i_{m-1}}, die ein signierter Text sind, der von einem unmittelbar vorhergehenden Signaturgerät eingegeben wurde, oder ein Hash-Wert davon, Nachrichten M_{1}, ... , M_{m-1}, die in die Signaturgeräte eingegeben werden, und öffentliche Schlüssel pk_{i_{1}}, ..., pk_{i_{m-1}} der Signaturgeräte, und den signierten Text, die Zusatzinformationen, die Nachrichten und die öffentlichen Schlüssel in dem genannten Speichermedium speichern;
T_{m-1} Rechenmittel, die Folgendes berechnen: T_{m-1}=M_{1}∥...∥M_{m-1}∥pk_{i_{1}}∥...∥pk_{i_{m-1}}, auf der Basis von Daten, die von den T_{m-1} Rechenmitteln aus dem genannten Speichermedium gelesen wurden, und das Rechenergebnis auf dem genannten Speichermedium speichern;
v" Rechenmittel, die v"=H(T_{m-1})ou_{m-1}} berechnen, auf der Basis von Daten, die von den v" Rechenmitteln aus dem genannten Speichermedium gelesen wurden, und die das Rechenergebnis in dem genannten Speichermedium speichern;
zweite Konversionsmittel, die Folgendes berechnen: v'=v"^{e_{i_{m-1}}} mod n_{i_{m-1}} falls v"<n_{i_{m-1}}, und v'=v", falls v"≥ n_{i_{m-1}}, auf der Basis von Daten, die von dem zweiten Konversionsmittel aus dem genannten Speichermedium gelesen werden, und das Rechenergebnis in dem genannten Speichermedium speichern;
bijektive Rechenmittel, die v=v'-n_{i_{m-1}} mod 2^{κ} auf der Basis von Daten berechnen, die von dem bijektiven Rechenmittel aus dem genannten Speichermedium gelesen werden, und das Rechenergebnis in dem Speichermedium speichern;
erste Konversionsmittel, die Folgendes berechnen: u_{i_{m-2}}=v^{e_{i_{m-1}}} mod n_{i_{m-1}}, falls v<n_{i_{m-1}}, und u_{i_{m-2}}=v, falls v ≥ n_{i_{m-1}} berechnet, auf der Basis von Daten, die von dem ersten Konversionsmittel aus dem genannten Speichermedium gelesen werden, und das Rechenergebnis in dem genannten Speichermedium speichern;
u Prüfmittel, die prüfen, ob u_{i_{m-2}} oder ein Hash-Wert davon mit den Zusatzinformationen v_{i_{m-1}} übereinstimmen; und
Ausgabemittel, die eine Verifikation-erfolgreich-Mitteilung ausgeben, wenn u_{i_{m-2}} oder ein Hash-Wert davon mit den Zusatzinformationen v_{i_{m-1}} übereinstimmen, und wenn nicht, eine Verifikationerfolglos-Mitteilung ausgeben;
wobei "∥" die Verkettung von Bitstrings bedeutet, "o" das Exklusiv-ODER auf einer Bitbasis bedeutet, "^" den arithmetischen Operator zum Potenzieren des linken Operanden mit dem Exponenten im rechten Operanden bedeutet, "_{x}" repräsentiert, dass x ein Subskript ist.

3. Programm, das bewirkt, dass ein Computer mit einem lesbaren/beschreibbaren Speichermedium arbeitet als:
Eingabemittel, die Folgendes empfangen: einen signierten Text u_{i_{m-1}}, der durch ein oder mehrere andere Signaturgeräte erzeugt wird, die sequentiell eine Signaturoperation durchführen, Zusatzinformationen v_{i_{m-1}}, die ein signierter Text sind, der von einem unmittelbar vorhergehenden Signaturgerät eingegeben wurde, oder ein Hash-Wert davon, Nachrichten M_{1}, ... , M_{m-1}, die in die Signaturgeräte eingegeben wurden, und öffentliche Schlüssel pk_{i_{1}}, ..., pk_{i_{m-1}} der Signaturgeräte, und die den signierten Text, die Zusatzinformationen, die Nachrichten und die öffentlichen Schlüssel in dem genannten Speichermedium speichern;
T_{m-1} Rechenmittel, die Folgendes berechnen: T_{m-1}=M_{1}∥...∥M{m-1}∥pk_{i_{1}}∥...∥pk_{i{m-1}}, auf der Basis von Daten, die von den T_{m-1} Rechenmitteln aus dem genannten Speichermedium gelesen werden, und das Rechenergebnis in dem genannten Speichermedium speichern;
v" Rechenmittel, die v"=H(T_{m-1})ou_{i_{m-1}} auf der Basis von Daten berechnen, die von den v" Rechenmitteln aus dem genannten Speichermedium gelesen werden, und das Rechenergebnis in dem genannten Speichermedium speichern;
zweite Konversionsmittel, die Folgendes berechnen: v'=v"^{e_{i_{m-1}}} mod n_{i_{m-1}}, falls v"<n_{i_{m-1}}, und v'=v", falls v" ≥ n_{i_{m-1}}, auf der Basis von Daten, die von dem zweiten Konversionsmittel aus dem genannten Speichermedium gelesen werden, und das Rechenergebnis in dem genannten Speichermedium speichern;
bijektive Rechenmittel, die v=v'-n_{i_{m-1}} mod 2^{κ} auf der Basis von Daten berechnen, die von dem bijektiven Mittel aus dem genannten Speichermedium gelesen werden, und das Rechenergebnis in dem Speichermedium speichern;
erste Konversionsmittel, die Folgendes berechnen: u_{i_{m-2}}=v^{e_{i_{m-1}}} mod n_{i_{m-1}}, falls v<n_{i_{m-1}}, und u_{i_{m-2}}=v, falls v ≥ n_{i_{m-1}} auf der Basis von Daten, die von dem ersten Konversionsmittel aus dem genannten Speichermedium gelesen werden, und das Rechenergebnis in dem genannten Speichermedium speichern;
u Prüfmittel, die prüfen, ob u_{i_{m-2}} oder ein Hash-Wert davon mit den Zusatzinformationen v_{i_{m-1}} übereinstimmen; und
Ausgabemittel, die eine Verifikation-erfolgreich-Mitteilung ausgeben, wenn u_{i_{m-2}} oder ein Hash-Wert davon mit den Zusatzinformationen v_{i_{m-1}} übereinstimmen, und wenn nicht, eine Verifikationerfolglos-Mitteilung ausgeben;
wobei "∥" die Verkettung von Bitstrings bedeutet, "o" das Exklusiv-ODER auf einer Bitbasis bedeutet, "^" den arithmetischen Operator zum Potenzieren des linken Operanden mit dem Exponenten im rechten Operanden bedeutet, "_{x}" repräsentiert, dass x ein Subskript ist.

## Revendications

1. Procédé de vérification comprenant les étapes consistant à :
a) recevoir, par un moyen d'entrée, un texte signé u_{i_{m-1}}, lequel est créé par un ou plusieurs autres dispositifs de signature qui effectuent séquentiellement une opération de signature, d'informations auxiliaires v_{i_{m-1}} qui sont un texte signé entré par un dispositif de signature immédiatement précédent ou une valeur de hachage de celui-ci, des messages M_{1}, ..., M_{m-1} entrés dans les dispositifs de signature, et des clés publiques pk_{i_{1}}, ..., pk_{i_{m-1}} des dispositifs de signature et sauvegarder le texte signé, les informations auxiliaires, les messages et les clés publiques dans un support de mémorisation ;
b) calculer, par un moyen de calcul de T_{m-1}, T_{m-1} = M_{1}∥...∥M_{m-1}∥ ... ∥ pk_{i{1}}∥ ... ∥ pk_{i_{m-1}}, en fonction des données lues par le moyen de calcul de T_{m-1} dans ledit support de mémorisation, et sauvegarder le résultat de calcul dans ledit support de mémorisation ;
c) calculer, par un moyen de calcul de v", v" = H(T_{m-1}) ou_{i_{m-1}}, en fonction des données lues par le moyen de calcul de v" dans ledit dudit support de mémorisation, et sauvegarder le résultat de calcul dans ledit support de mémorisation ;
d) calculer, par un second moyen de conversion, v' = v" ^{ e_{i_{m-1}}} mod n_{i_{m-1}} si v" < n_{i_{m-1}}, ou v' = v" si V"≥n_{i_{m-1}}, en fonction des données lues par le second moyen de conversion dans ledit support de mémorisation, et sauvegarder le résultat du calcul dans ledit support de mémorisation ;
e) calculer, par un moyen de calcul bijectif, v= v'-n_i_{m-1}} mod 2^{x}, en fonction des données lues par le premier moyen de calcul bijectif dans ledit support de mémorisation, et sauvegarder le résultat du calcul dans ledit support de mémorisation ;
f) calculer, par un premier moyen de conversion, u_{i_{m-2}} = v^{e_{i_{m-1}}} mod n_{i_{m-1}} si v < n_{m-1}}, ou u_{i_{m-2}} = v si v ≥ n_{i_{m_1}}, en fonction des données lues par le premier moyen de conversion dans ledit support de mémorisation, et sauvegarder le résultat du calcul dans ledit support de mémorisation ;
g) vérifier, par un moyen de vérification de u, si u_{i_{m-2}} ou une valeur de hachage de celui-ci correspond aux informations auxiliaires v_{i_{m-1}} ; et
h) produire en sortie, par un moyen de sortie, une notification de vérification positive si u_{i_{m-2}} ou une valeur de hachage de celui-ci correspond aux informations auxiliaires v_{i_{m-1}} et, dans le cas contraire, la production en sortie d'une notification de vérification négative ;
dans lequel "∥" signifie la concaténation de chaînes de bits, "o" signifie le OU exclusif au niveau binaire. "^" représente l'opérateur arithmétique pour l'exponentiation de l'opérande gauche par l'exposant dans l'opérande droit. "_{x}" indique que x est un indice inférieur.

2. Dispositif de vérification comprenant :
un support de mémorisation lisible/inscriptible ;
un moyen d'entrée qui reçoit un texte signé u_{i_{m-1}}, lequel est créé par un ou plusieurs autres dispositifs de signature qui effectuent séquentiellement une opération de signature, des informations auxiliaires v_{i_{m-1}} qui sont un texte signé entré par un dispositif de signature immédiatement précédent ou une valeur de hachage de celui-ci, des messages M_{1},, M_{m-1} entrés dans les dispositifs de signature, et des clés publiques pk_{i_{1}}, ..., pk_{i_{m-1}} des dispositifs de signature et sauvegarde le texte signé, les informations auxiliaires, les messages et les clés publiques dans un support de mémorisation ;
un moyen de calcul de T_{m-1} qui calcule T_{m-1} = M_{1}∥...∥ M_{m-1}∥...∥ pk_{i_{1}}∥...∥ pk_{i_{m-1}}, en fonction des données lues par le moyen de calcul de T_{m-1} dans ledit support de mémorisation, et qui sauvegarde le résultat de calcul dans ledit support de mémorisation ;
un moyen de calcul de v" qui calcule v" = H(T_{m-1} ou_{i_{m-1}}, en fonction des données lues par le moyen de calcul de v" dans ledit dudit support de mémorisation, et qui sauvegarde le résultat de calcul dans ledit support de mémorisation ;
un second moyen de conversion qui calcule v' = v" ^{e_{i_{m-1}}} mod n_{i_{m-1}} si v" < n_{i_{m-1}}, et qui calcule v' = v" si V"≥n_{i_{m-1}}, en fonction des données lues par le second moyen de conversion dans ledit support de mémorisation, et qui sauvegarde le résultat du calcul dans ledit support de mémorisation ;
un moyen de calcul bijectif qui calcule v= v'-n_i_{m-1}} mod 2^{x}, en fonction des données lues par le moyen de calcul bijectif dans ledit support de mémorisation, et qui sauvegarde le résultat du calcul dans ledit support de mémorisation ;
un premier moyen de conversion qui calcule u_{i_{m-2}} = v^{e_{i_{m-1}}} mod n_{i_{ m_1}} si v < n_{m-1}}, et qui calcule u_{i_{m-2}} = v si v ≥ n_{i_{m-1}}, en fonction des données lues par le premier moyen de conversion dans ledit support de mémorisation, et qui sauvegarde le résultat du calcul dans ledit support de mémorisation ;
un moyen de vérification qui vérifie si u_{i_{m-2}} ou une valeur de hachage de celui-ci correspond aux informations auxiliaires v_{i_{m-1}} ; et
un moyen de sortie qui produit en sortie une notification de vérification positive si u_{i_{m-2}} ou une valeur de hachage de celui-ci correspond aux informations auxiliaires v-_{i_{m-1}} et, dans le cas contraire, qui produit en sortie une notification de vérification négative ;
dans lequel "∥" signifie la concaténation de chaînes de bits, "o" signifie le OU exclusif au niveau binaire. "^" représente l'opérateur arithmétique pour l'exponentiation de l'opérande gauche par l'exposant dans l'opérande droit. "_{x}" indique que x est un indice inférieur.

3. Programme qui amène un ordinateur ayant un support de mémorisation lisible/inscriptible à fonctionner comme :
moyen d'entrée qui reçoit un texte signé u_{i_{m-1}}, lequel est créé par un ou plusieurs autres dispositifs de signature qui effectuent séquentiellement une opération de signature, des informations auxiliaires v_{i_{m-1}} qui sont un texte signé entré par un dispositif de signature immédiatement précédent ou une valeur de hachage de celui-ci, des messages M_{1}, , M_{m-1} entrés dans les dispositifs de signature, et des clés publiques pk_{i_{1}}, ... , pk_{i_{m-1}} des dispositifs de signature et sauvegarde le texte signé, les informations auxiliaires, les messages et les clés publiques dans un support de mémorisation ;
un moyen de calcul de T_{m-1} qui calcule T_{m-1} = M_{1}∥...∥ M_{m-1}∥...∥ pk_{i_{1}}∥ ...∥ pk_{i_{m-1}}, en fonction des données lues par le moyen de calcul de T_{m-1} dans ledit support de mémorisation, et qui sauvegarde le résultat de calcul dans ledit support de mémorisation ;
un moyen de calcul de v" qui calcule v" = H(T_{m-1} ou_{i_{m-1}}, en fonction des données lues par le moyen de calcul de v" dans ledit dudit support de mémorisation, et qui sauvegarde le résultat de calcul dans ledit support de mémorisation ;
un second moyen de conversion qui calcule v' = v" ^{ e_{i_{m-1}}} mod n_{i_{m-1}} si v" < n_{i_{m-1}}, et qui calcule v' = v" si V"≥n_{i_{m-1}}, en fonction des données lues par le second moyen de conversion dans ledit support de mémorisation, et qui sauvegarde le résultat du calcul dans ledit support de mémorisation ;
un moyen de calcul bijectif qui calcule v= v'-n_i_{m-1}} mod 2 ^ {x}, en fonction des données lues par le moyen de calcul bijectif dans ledit support de mémorisation, et qui sauvegarde le résultat du calcul dans ledit support de mémorisation ;
un premier moyen de conversion qui calcule u_{i_{m-2}} = v^{e_{i_{m-1}}} mod n_{i_{ m_1}} si v < n_{m-1}}, et qui calcule u_{i_{m-2}} = v si v ≥ n_{i_{m-1}}, en fonction des données lues par le premier moyen de conversion dans ledit support de mémorisation, et qui sauvegarde le résultat du calcul dans ledit support de mémorisation ;
un moyen de vérification qui vérifie si u_{i_{m-2}} ou une valeur de hachage de celui-ci correspond aux informations auxiliaires v_{i_{m-1}} ; et
un moyen de sortie qui produit en sortie une notification de vérification positive si u_{i_{m-2}} ou une valeur de hachage de celui-ci correspond aux informations auxiliaires v-_{i_{m-1}} et, dans le cas contraire, qui produit en sortie une notification de vérification négative ;
dans lequel "∥" signifie la concaténation de chaînes de bits, "o" signifie le OU exclusif au niveau binaire. "^" représente l'opérateur arithmétique pour l'exponentiation de l'opérande gauche par l'exposant dans l'opérande droit."_{x}" indique que x est un indice inférieur.
